Europäisches Patentamt

European Patent Office

Office européen des brevets

(19)

(11) Veröffentlichungsnummer : **0 190 744**
**B1**

(12) **EUROPÄISCHE PATENTSCHRIFT**

(45) Veröffentlichungstag der Patentschrift :
**20.01.88**

(21) Anmeldenummer : **86101498.3**

(22) Anmeldetag : **05.02.86**

(51) Int. Cl.⁴ : **B 65 G 49/06**

(54) **Flachglas-Transportgestell für Innenladerfahrzeuge.**

(30) Priorität : **06.02.85 DE 3503976**

(43) Veröffentlichungstag der Anmeldung :
**13.08.86 Patentblatt 86/33**

(45) Bekanntmachung des Hinweises auf die Patenterteilung : **20.01.88 Patentblatt 88/03**

(84) Benannte Vertragsstaaten :
**BE DE FR IT LU**

(56) Entgegenhaltungen :
**DE-A- 3 325 881**
**US-A- 3 233 753**

(73) Patentinhaber : **VEGLA Vereinigte Glaswerke GmbH**
**Viktoriaallee 3-5**
**D-5100 Aachen (DE)**

(72) Erfinder : **Hülsmann, Lothar, Ing.grad.**
**Pfarrer-Gau Strasse 15**
**D-5190 Stolberg (DE)**
Erfinder : **Roeben, Alfred**
**Aachener Strasse 287**
**D-5112 Baesweiler (DE)**
Erfinder : **Wissgens, Hans**
**Stettiner Strasse 49**
**D-5100 Aachen (DE)**

(74) Vertreter : **Biermann, Wilhelm, Dr.-Ing. et al**
**VEGLA Vereinigte Glaswerke GmbH Viktoriaallee 3-5**
**D-5100 Aachen (DE)**

EP 0 190 744 B1

## Beschreibung

Die Erfindung betrifft ein für den Transport mit Hilfe eines Innenladerfahrzeugs geeignetes Flachglas-Transportgestell mit absenkbaren Standfüßen, die in der nach unten ausgefahrenen Arbeitsstellung und in der oberen Ruhestellung festlegbar sind.

Lager und Transportgestelle dieser Art werden in der Regel mit zwei jeweils bis zu 125 t schweren Glasscheibenpaketen beladen. Das mehr als 25 t schwere beladene Gestell wird mit besonderen Innenladerfahrzeugen transportiert, die keinen durchgehenden Boden aufweisen, sondern gabelförmig ausgebildet und mit zwei parallelen Auflagern versehen sind. Der gabelförmig ausgebildete Lastkraftwagen fährt zur Übernahme des Gestells mit abgesenkten Auflagern rückwärts unter entsprechende seitliche Auflageflächen am Boden des Gestells. Wenn das Gestell die Endposition oberhalb der Auflager eingenommen hat, werden die Auflager pneumatisch angehoben, bis die Standfüße völlig entlastet sind und vom Boden abheben. Die Arretierung an den Standfüßen wird sodann gelöst, und die Standfüße werden in ihre obere Stellung gebracht, in der sie wieder durch geeignete Arretierungsmittel gesichert werden. Wenn das Fahrzeug nach dem Transport der Ladung an den Bestimmungsort die Position erreicht hat, in der das Gestell abgesetzt werden soll, werden die Standfüße wieder abgesenkt und in ihrer unteren Stellung beispielsweise durch Steckbolzen gesichert. Anschließend werden die Auflager des Fahrzeugs abgesenkt, so daß das Fahrzeug von dem Transportgestell freikommt, und vorwärts wegfahren kann.

Ein für diesen Zweck bekanntes Transportgestell (DE-GM 80 02 992) weist vier Standfüße auf, die an den äußersten Ecken der Bodenkonstruktion des Gestells angeordnet sind. Hierbei sind die Standfüße jeweils in einer senkrecht angeordneten Führungshülse in senkrechter Richtung verschiebbar gelagert, und werden in ihren beiden Endstellungen durch Steckbolzen arretiert. Die für die Verstellung der Standfüße erforderlichen Manipulationen müssen von Hand an jedem einzelnen Standfuß durchgeführt werden. Diese mehrfachen Manipulationen sind umständlich und zeitraubend. Um den Zugang zu den Standfüßen zu ermöglichen, sind diese an den äußersten Ecken des Transportgestells angeordnet. Das bedeutet, daß wegen des hohen Gewichts der zu transportierenden Glasscheibenpakete eine verhältnismäßig aufwendige und schwere Konstruktion des Transportgestells erforderlich ist. Außerdem müssen an dem Innenladerfahrzeug selbst besondere konstruktive Maßnahmen vorgesehen weren, um die in Fahrtrichtung des Fahrzeugs vorderen Standfüße für die Bedienungsperson zugänglich zu machen.

Es ist ferner ein Flachglas-Transportgestell der eingangs genannten Art bekannt, bei dem die vertikal verschiebbaren Standfüße durch eine gemeinsame Betätigungsvorrichtung gleichzeitig angehoben und abgesenkt werden können, und bei dem eine gemeinsame Betätigungsvorrichtung für das gleichzeitige Verriegeln und Entriegeln aller Standfüße vorgesehen ist (DE-OS 33 25 881). Das gleichzeitige Anheben oder Absenken der Standfüße erfolgt dabei mit Hilfe von an den Standfüßen angreifenden pneumatischen Druckzylindern. Diese bekannte Konstruktion eines gattungsgemäßen Transportgestells ist verhältnismäßig aufwendig.

Der Erfindung liegt die Aufgabe zugrunde, ein für den Transport mit Innenladerfahrzeugen geeignetes Flachglas-Transportgestell zu schaffen, das einerseits für die Verstellung seiner Standfüße keine zusätzlichen Maßnahmen am Innenladerfahrzeug erfordert, sondern ausschließlich von einer Stirnseite des Gestells her bedienbar ist, und das andererseits in seinem Aufbau und seiner Konstruktion sowohl hinsichtlich des gesamten Gestells als auch besonders hinsichtlich des Mechanismus zum Absenken und Sichern der Standfüße einfach, robust und preiswert ist.

Gemäß der Erfindung wird diese Aufgabe dadurch gelöst, daß jeweils die entlang einer Längsseite verschwenkbar angeordneten Standfüße mit einer gemeinsamen drehbar gelagerten Welle drehfest verbunden sind, und daß die gemeinsame Welle sich wenigstens bis zu einer Stirnseite des Transportgestells fortsetzt und von hier aus verdrehbar und arretierbar ist.

Durch die erfindungsgemäße gemeinsame Verschwenkung jeweils eines Standfußpaares nach innen, das heißt zur vertikalen Mittel-Längs-Ebene des Transportgestells hin von der frei zugänglichen Stirnseite des Gestells aus, werden alle zusätzlichen konstruktiven Änderungen oder Maßnahmen am Fahrzeug selbst überflüssig. Da nunmehr der unmittelbare Zugang zu den Standfüßen nicht mehr erforderlich ist, brauchen diese nicht mehr an den äußeren Ecken des Bodenteils des Gestells angeordnet zu werden, sondern können nunmehr an Stellen angeordnet werden, die aus statischen Gründen günstiger sind und eine leichtere Konstruktion des Transportgestells ermöglichen. Die schwenkbare Lagerung der Standfüße führt darüberhinaus zu einer verhältnismäßig einfachen, robusten und preiswerten Konstruktion, und der Bedienungsaufwand für das Transportgestell beim Anheben oder Absenken der Standfüße ist in jeder Beziehung auf ein Mindestmaß reduziert.

Die Standfüße können mit der jeweiligen gemeinsamen Welle starr verbunden, und die Welle selbst ortsfest in Drehlagern gelagert sein. In diesem Fall muß die Arretierung und eine eventuelle zusätzliche Sicherung in der Arbeitsstellung durch zusätzliche Arretierungs- bzw. Sicherungsmittel erfolgen.

Gemäß einer besonders zweckmäßigen Ausgestaltung der Erfindung können die Standfüße oder die Welle um ein geringes Maß verschiebbar gelagert sein derart, daß die Verschiebung beispielsweise in der Arbeitsstellung der Standfüße unter dem Eigengewicht des Transportgestells erfolgt, und durch diese Verschiebung sich die Standfüße in dieser Stellung selbsttätig arretieren und sichern.

Weitere zweckmäßige Ausgestaltungen, Weiterbildungen und Vorteile des erfindungsgemäßen Transportgestells ergeben sich aus der nachfolgenden Beschreibung eines bevorzugten Ausführungsbeispiels anhand der Zeichnungen.

Von den Zeichnungen zeigt

Fig. 1 eine Gesamtansicht des Transportgestells auf eine Längsseite ;

Fig. 2 eine Gesamtansicht des Transportgestells auf eine Stirnseite ;

Fig. 3 eine die Konstruktion und Lagerung eines Standfußes betreffende vergrößerte Darstellung als Schnitt in Querrichtung des Transportgestells ;

Fig. 4 die Konstruktion und Lagerung eines Standfußes in vergrößerter Darstellung als Schnitt in Längsrichtung des Transportgestells ;

Fig. 5 die Betätigungs- und Verriegelungsvorrichtung für die Standfüße in der Ansicht von der Stirnseite des Transportgestells, und

Fig. 6 die Betätigungs- und Verriegelungsvorrichtung für die Standfüße in Form eines Längsschnitts.

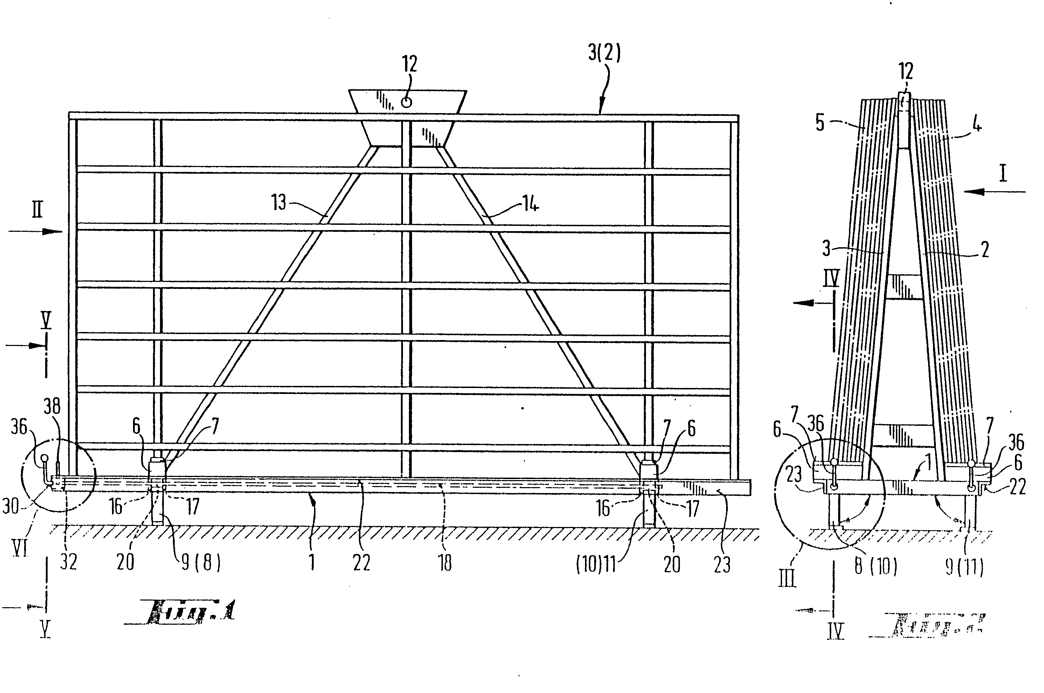

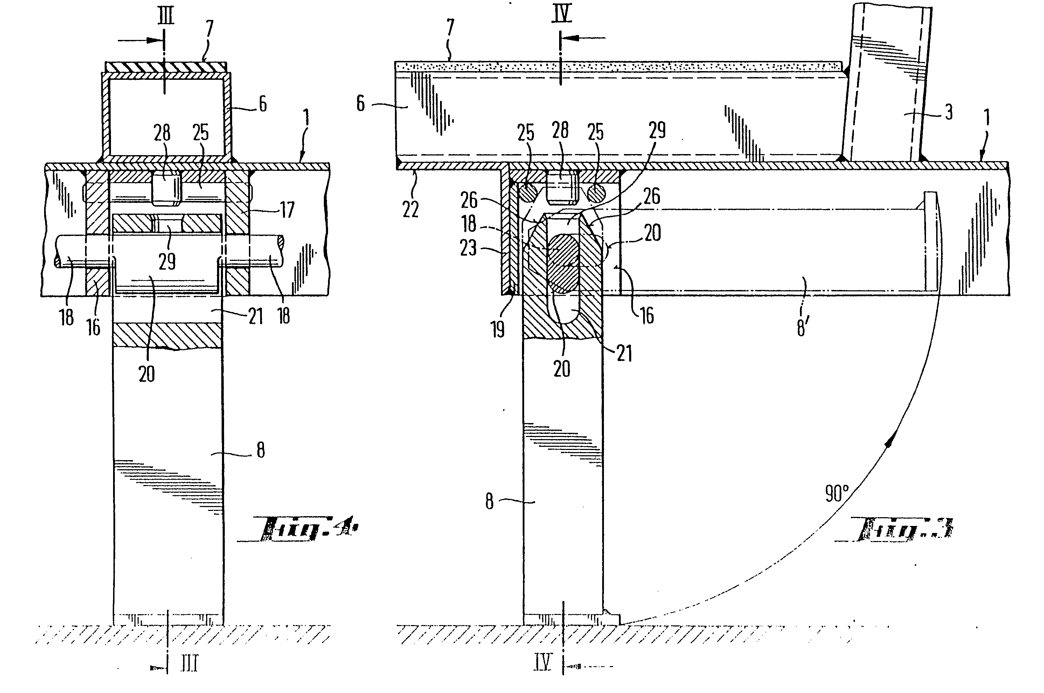

Wie aus den Fig. 1 und 2 hervorgeht, besteht das Transportgestell aus einem Bodenteil 1 und zueinander geneigt angeordneten Stützrahmen 2, 3, die aus geeigneten Metallprofilen zusammengeschweißt sind. Gegen diese Stützrahmen 2, 3 legen sich die Glasscheibenpakete 4, 5 an und werden durch geeignete nicht dargestellte Mittel miteinander verspannt. Die Glasscheibenpakete 4, 5 stehen auf mit einer elastischen Auflage 7 versehenen Vierkantrohr-Abschnitten 6, die auf dem Bodenteil 1 oberhalb der Standfüße 8, 9, 10 und 11 angeordnet sind.

Das Transportgestell ist oben in der Mitte mit einer Tragöse 12 versehen, die den Transport des Gestells mit Hilfe eines Krans erlaubt. Zwischen der Tragöse 12 und dem Bodenteil 1 weist die Konstruktion schräg verlaufende Streben 13, 14 auf, die einerseits mit der Tragöse 12, und andererseits mit dem Bodenteil 1 im Bereich der Standfüße verbunden sind. Da die Last der Glasscheibenpakete über die Rohrabschnitte 6 ebenfalls an derjenigen Stelle auf den Bodenteil 1 übertragen wird, an der die Standfüße und die beim hängenden Transport die Last aufnehmenden Streben 13, 14 am Bodenteil 1 angreifen, wird auf diese Weise eine minimale Biegebelastung des Bodenteils 1 sowie der gesamten Gestellkonstruktion erreicht, und es wird damit möglich, ein Transportgestell mit verhältnismäßig geringem Eigengewicht herzustellen, so daß bei vorgeschriebener Höchstgrenze für das Gesamtgewicht entsprechend größere Glasmengen auf einem Gestell transportiert werden können.

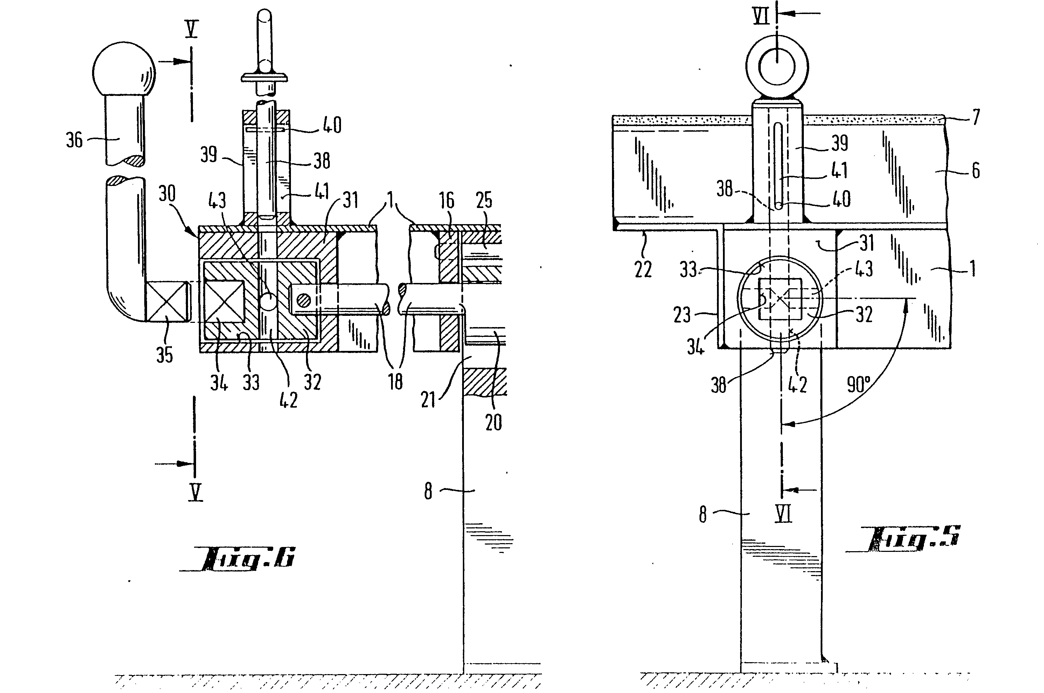

Aufbau und Lagerung der Standfüße 8 bis 11 ist im einzelnen aus den Figuren 3 und 4 ersichtlich. Im Bodenteil 1 sind Metallplatten 16, 17 eingeschweißt, die als Lager für die Drehwelle 18 sowie zur seitlichen Abstützung des verschwenkbaren Standfußes 8 dienen. Die Schwenkbewegung des Standfußes 8 nach außen wird begrenzt durch das ebenfalls im Bodenteil 1 eingeschweißte Metallprofil 19.

Die Verschwenkung des Standfußes 8 in seine Ruhelage 8', in der er um 90° nach innen hin verschwenkt ist und sich in dieser Lage innerhalb des Bodenteils 1 befindet, erfolgt mit Hilfe der Welle 18, der, wie später anhand der Figuren 5 und 6 beschrieben wird, die notwendige Drehbewegung von der Stirnseite des Transportgestells her erteilt wird. Der Standfuß 8 ist mit dieser Welle 18 über den mit der Welle 18 fest verbundenen Nocken 20 drehfest verbunden. Der Nocken 20 ist in dem am oberen Ende des Standfußes 8 angebrachten Langloch 21 derart gelagert, daß der Standfuß 8 um das durch die Differenz der Abmessungen des Langlochs 21 und des Nockens 20 gegebene Maß in der Höhe verschieblich ist.

Solange die Standfüße nicht belastet sind, das heißt solange das Transportgestell mit den Auflageflächen 22 der seitlich am Bodenteil 1 angeordneten Winkeleisen 23 auf den entsprechenden Tragflächen des Innenladers aufliegt, nehmen die Standfüße, nachdem sie durch Verdrehen der Welle 18 aus der Ruhestellung in die senkrechte Stellung verbracht worden sind, die in den Figuren 3 und 4 dargestellte Lage ein, bei der die Standfüße auf dem Nocken 20 der Welle 18 hängen.

Senkt sich nun durch Absenken des Innenladers das Gestell ab, dann bewegen sich die Standfüße in ihre obere Stellung, d. h. in ihre Arbeitsstellung, sobald das Gestell so weit abgesenkt ist, daß die Standfüße den Boden berühren. Dabei bewegt sich das Langloch 21 über den Nocken 20 nach oben. Die Schrägflächen 26 am Kopf des Standfußes 8 kommen dabei in Kontakt mit den Bolzen 25, die mit den Lagerplatten 16, 17 verbunden sind und die dafür sorgen, daß der Standfuß 8 in die korrekte senkrechte Lage zum Bodenteil 1 gebracht wird. In der Endstellung liegen die beiden Bolzen 25 fest an den Schrägflächen 26 an, klemmen den Kopf des Standfußes fest und schaffen so eine sichere formschlüssige Verbindung zwischen dem Bodenteil 1 und dem Standfuß 8. Zur weiteren Sicherung trägt der senkrecht angeordnete Arretierungsbolzen 28 bei, beim Aufsetzen des Gestells auf die Standfüße in die entsprechende Öffnung 29 am Kopf des Standfußes 8 eindringt und für eine weitere Arretierung und Sicherung gegen eine Verschwenkung des Standfußes 8 sorgt. Diese obere Stellung, das heißt die Arbeitsstellung, in der der Standfuß 8 auf die beschriebene Weise gegen jede Verschwenkung gesichert ist, ist in Fig. 3 strichpunktiert angedeutet.

Jede Welle 18 betätigt die beiden an einer Längsseite angeordneten Standfüße 8 und 10 bzw. 9 und 11 (Fig. 1 und 2) gleichzeitig. Sie ist deshalb als durchgehende Stange ausgebildet und ist bis zur Stirnseite 30 des Bodenteils 1 durchgeführt. Gegebenenfalls kann sie auch bis zur anderen Stirnseite des Transportgestells durchgeführt werden, wenn die Standfüße wahlweise von der einen oder von der anderen Stirnseite aus betätigt werden sollen.

Am stirnseitigen Ende 30 des Bodenteils 1 (Fig. 5 und 6) ist ein Lagerblock 31 im Bodenteil 1 angebracht. Dieser Lagerblock 31 dient einerseits als Drehlager für die Welle 18, und andererseits zur Arretierung der Welle 18 in der Ruhestellung und in der Arbeitsstellung der Standfüße. Zu diesem Zweck ist am Ende der Welle 18 ein zylinderförmiges Endstück 32 fest mit der Welle 18 verbunden. Dieses Endstück 32 ist in einer entsprechenden zylindrischen Ausnehmung 33 in dem Lagerblock 31 gelagert. Am hinteren Ende ist das Endstück 32 mit einer viereckigen Ausnehmung 34 versehen, in die der entsprechend ausgebildete Vierkant 35 eines Hebels 36 eingreift. Mit Hilfe dieses Hebels 36 werden über die Welle 18 die jeweils mit dieser drehfest verbundenen Standfüße in die jeweils gewünschte Stellung verschwenkt.

Zur Arretierung in der jeweiligen Endstellung dient der Arretierungsbolzen 38, der in der Führungshülse 39 verschiebbar gelagert ist. Der den Arretierungsbolzen 38 durchdringende Sicherungsstift 40 gleitet in dem Schlitz 41. Er sorgt dafür, daß der Arretierungsbolzen 38 nicht entfernt werden kann. In dem Endstück 32 sind die beiden aufeinander senkrecht stehenden Bohrungen 42, 43 angebracht, in die der Arretierungsbolzen 38 zur Festlegung der Welle 18 eingesteckt wird.

## Patentansprüche

1. Flachglas-Transportgestell für Innenladerfahrzeuge, mit absenkbaren Standfüßen, die in der nach unten ausgefahrenen Arbeitsstellung und in der oberen Ruhestellung festlegbar sind, dadurch gekennzeichnet, daß jeweils die entlang einer Längsseite verschwenkbar angeordneten Standfüße (8, 10 ; 9, 11) mit einer gemeinsamen drehbar gelagerten Welle (18) drehfest verbunden sind, und daß die gemeinsame Welle (18) sich bis zu einer Stirnseite (30) des Transportgestells fortsetzt, und von hier aus verdrehbar und arretierbar ist.

2. Flachglas-Transportgestell nach Anspruch 1, dadurch gekennzeichnet, daß die Standfüße (8, 10 ; 9, 11) zur Ruhestellung nach innen in den Bodenteil (1) des Transportgestells hinein verschwenkbar sind.

3. Flachglas-Transportgestell nach Anspruch 1 und 2, dadurch gekennzeichnet, daß zur Arretierung der Welle (18) in den beiden den Endstellungen der Standfüße (8, 10 ; 9, 11) entsprechenden Winkelstellungen am stirnseitigen Ende des Bodenteils (1) ein in einem Lagerblock (31) drehbar gelagertes, mit der Welle (18) verbundenes Endstück (32) vorgesehen ist, das mit zwei senkrecht aufeinanderstehenden Bohrungen (42, 43) versehen ist, die senkrecht zur Drehachse verlaufen und in die ein Arretierungsbolzen (38) einführbar ist.

4. Flachglas-Transportgestell nach Anspruch 3, dadurch gekennzeichnet, daß in dem Endstück (32) stirnseitig eine Mehrkantausnehmung zur Aufnahme des Mehrkants (35) eines Hebels (36) vorgesehen ist.

5. Flachglas-Transportgestell nach einem oder mehreren der Ansprüche 1 bis 4, dadurch gekennzeichnet, daß die mit den verschwenkbaren Standfüßen (8, 10 ; 9, 11) drehfest verbundene Welle (18) sich bis zu beiden Stirnseiten des Transportgestells fortsetzt.

6. Flachglas-Transportgestell nach einem oder mehreren der Ansprüche 1 bis 5, dadurch gekennzeichnet, daß die drehfeste Verbindung zwischen der Welle (18) und den verschwenkbaren Standfüßen durch einen mit der Welle (18) verbundenen Nocken (20) und ein im Kopf des Standfußes (8) angeordnetes Langloch (21) verwirklicht ist, und daß die hierdurch ermöglichte Relativbewegung zwischen dem Nocken (20) und dem Langloch (21) beim Absenken des Bodenteils (1) auf die Standfüße zur formschlüssigen Verbindung des Standfußkopfes mit Sicherungsbolzen (25, 28) dient.

7. Flachglas-Transportgestell nach Anspruch 6, dadurch gekennzeichnet, daß ein oberhalb des Nockens (20) am Bodenteil (1) fest angeordneter Sicherungsbolzen (28) mit senkrechter Ausrichtung in eine am Kopfende des Standfußes (8) senkrecht angeordnete Bohrung (29) eingreift.

## Claims

1. A sheet glass transporting frame for internal self-loading vehicles with support feet which are able to be lowered and are able to be locked in the downwardly extended position and in the upper inactive position, characterized in that the support feet (8, 10 ; 9, 11) respectively arranged to be pivoted along one longitudinal side are locked in rotation with a common shaft (18) supported so as to be able to turn, and in that the common shaft (18) is continued as far as one end side (30) of the transport frame from which position it is able be turned and locked.

2. The sheet glass transport frame as claimed in claim 1 characterized in that the support feet (8, 10 ; 9, 11) are able to be pivoted towards the inactive position inwards into the floor part (1) of the transport frame.

3. The sheet glass transport frame as claimed in claims 1 and 2 characterized in that for locking the shaft (18) in the angular settings corresponding to the two end positions of the support feet (8, 10 ; 9, 11) on the end of the floor part (19 there is an end piece (32) pivotally mounted in a pillow bearing (31) and connected with the shaft (18) and which has two holes (42 and 43) perpendicular to each other and which extend perpendicularly to the axis of rotation and into which a locking pin (38) may be inserted.

4. The sheet glass transport frame as claimed in claim 3 characterized in that at the end face of the end piece (32) there is a polygonal recess to accept the polygonal part (35) of a lever (36).

5. The sheet glass transport frame as claimed in any one or more of the preceding claims 1 through 4 characterized in that the shaft (18) locked in rotation with the support feet (8, 10 ; 9, 11) is extended as far as the two ends of the transport frame.

6. The sheet glass transport frame as claimed in any one or more of the preceding claims 1 through 5 characterized in that the rotationally stiff connection between the shaft (18) and the pivoting support feet is in the form of a sprag (20) connected with the shaft (18) and a slot arranged in the head of the support foot (8) and in that the relative motion between the sprag (20) and the slot (21) thus made possible on lowering the floor part (1) onto the support feet serves for providing an interlocking connection between the head of the support foot with securing pins (25 and 28).

7. The sheet glass transport frame as claimed in claim 6 characterized in that a securing pin (28) fixedly arranged on the floor part (1) above the sprag (20) and having a perpendicular alignment fits into a hole (29) arranged perpendicularly at the head end of the support foot (8).

## Revendications

1. Pupitre de transport de verre plat pour des véhicules à système de chargement intérieur, comportant des pieds de support abaissables qui peuvent être fixés dans la position de travail, sortie vers le bas, et dans la position de repos supérieure, caractérisé en ce que les pieds de support (8, 10 ; 9, 11) montés pivotants le long d'un côté longitudinal respectif sont reliés rigidement à un arbre commun monté à rotation (18) et que l'arbre commun (18) s'étend jusqu'à un côté d'about (30) du pupitre de transport et peut être tourné et arrêté à partir de cet endroit.

2. Pupitre de transport de verre plat, caractérisé en ce que les pieds de support (8, 10 ; 9, 11) peuvent pivoter vers la position de repos vers l'intérieur dans la partie de fond (1) du pupitre de transport.

3. Pupitre de transport de verre plat suivant les revendications 1 et 2, caractérisé en ce que pour arrêter l'arbre (18) dans les deux positions angulaires correspondant aux positions d'extrémité des pieds de support (8, 10 ; 9, 11), à l'extrémité d'about de la partie de fond (1) est prévue une pièce d'extrémité (32) montée à rotation dans un bloc-palier (31), reliée à l'arbre (18) et pourvue de deux forures (42, 43) perpendiculairement l'une à l'autre qui s'étendent perpendiculairement à l'axe de rotation et dans lesquelles une broche d'arrêt (38) peut être enfoncée.

4. Pupitre de transport de verre plat suivant la revendication 3, caractérisé en ce que du côté d'about, un évidement à plusieurs faces est prévu dans la pièce d'extrémité (32) pour recevoir la partie à plusieurs faces (35) d'une manette (36).

5. Pupitre de transport de verre plat suivant l'une quelconque des revendications 1 à 4, caractérisé en ce que l'arbre (18) relié rigidement aux pieds de support pivotants (8, 10 ; 9, 11) se prolonge jusqu'aux deux côtés d'about du pupitre de transport.

6. Pupitre de transport de verre plat suivant l'une quelconque des revendications 1 à 5, caractérisé en ce que la liaison rigide entre l'arbre (18) et les pieds de support pivotants est réalisée par une came (20) reliée à l'arbre (18) et une boutonnière (21) ménagée dans la tête du pied de support (8), et que le déplacement relatif ainsi rendu possible entre la came (20) et la boutonnière (21), lorsque la partie de fond (1) est abaissée sur les pieds de support, sert à assurer une liaison à épousement de forme entre la tête du pied de support et des broches de verrouillage (25, 28).

7. Pupitre de transport de verre plat suivant la revendication 6, caractérisé en ce qu'une broche de verrouillage (28) orientée verticalement et fixée rigidement au-dessus de la came (20) sur la partie de fond (1) s'engage dans une ouverture (29) prévue verticalement dans l'extrémité de tête du pied de support (8).

FIG. 1

FIG. 2

Fig. 3

Fig. 4

Fig.6

Fig.5

0 190 744